# EUROPEAN PATENT APPLICATION

(11) **EP 3 836 589 A1**
(43) Date of publication of application: **16.06.2021**
(21) Application number: 19306651.1
(22) Date of filing: 13.12.2019
(51) Int. Cl.: H04W 12/00, H04W 12/02, H04W 12/06

(54) **METHOD FOR AUTHENTICATING A SECURE ELEMENT AT THE LEVEL OF AN AUTHENTICATION SERVER, CORRESPONDING SECURE ELEMENT AND AUTHENTICATION SERVER**

(71) Applicant: THALES DIS FRANCE SA, 92190 Meudon (FR)
(72) Inventor: PHAN, Ly-Thanh, 13881 GEMENOS CEDEX (FR)
(74) Representative: Scheer, Luc

(57) **Abstract**

The invention concerns a method for authenticating a secure element 10 at the level of an authentication server 12, the secure element 10 being able to cooperate with a telecommunication terminal, the method comprising:
- Generating at the secure element 10 a first message comprising a partial IMSI of the secure element 10 or a partial IMSI of an IMSI based user identity that is in the form of a NAI of the secure element, called MSIN_part1, the first message also comprising the MCC and MNC codes of the IMSI or of the IMSI based user identity that is in the form of a NAI of the secure element 10, the MSIN_part1 comprising some of the most significant digits of the MSIN;
- Generating at the secure element 10 a second message containing a second part, called MSIN_part2, of the MSIN of the secure element 10 and the current sequence number, the second message being encrypted by the key Ki of the secure element 10 in order to provide a token X, the MSIN_part2 comprising some of the less significant digits of the MSIN;
- Transmitting the first message and the token X to the authentication server 12;
- At the authentication server 12, creating a list of the candidate secure elements for which the MSIN_part1 corresponds and, for each of the candidate secure elements of the list, decrypting the token X with the key Ki of each of the candidate secure elements of the list, in order to generate a decrypted IMSI comprising the MCC, MNC and MSIN_part1 of the first message and decrypted MSIN_part2 of the token X or a decrypted IMSI based user identity that is in the form of a NAI comprising the MCC, MNC and MSIN_part1 of the first message and the decrypted MSIN_part2 of the token X;
- Checking at the authentication server 12, for each candidate secure element of the list, which candidate IMSI or candidate IMSI based user identity that is in the form of a NAI :
a corresponds to the decrypted IMSI of the decrypted token X; and
b has an associated sequence number in a valid range of the decrypted sequence number;

- At the authentication server 12, generating an authentication vector by using the key Ki of the candidate secure element associated to the IMSI or IMSI based user identity that is in the form of a NAI that matches the decrypted MSIN_part2 of the decrypted token X and the candidate secure element has sequence number in a valid range of the decrypted sequence number in order to launch a challenge response process between the secure element 10 and the authentication server 12.

## Description

The invention concerns telecommunications and in particular a symmetric key based method and system intended to protect identity privacy of loT (Internet of Things) devices.

It is known that loT devices with low computation capability (low cost devices) need to cipher their identity to comply with GDPR (General Data Protection Regulation).

loT devices are communicating with secure elements like UICCs, iUICCs (integrated UICCs), eUICCs (embedded UICCs) or soft Sims.

GDPR requires protection of user identity privacy. This includes identities of loT devices.

In 3GPP, initial authentication to the network requires the device to which the secure element is cooperating, to send its permanent subscription identity (e.g. IMSI - International Mobile Subscriber Identity) in clear over the air interface to the serving access network. This is the case in 3GPP when identity encryption mechanism is not available (e.g. in GSM, UMTS or LTE). Identity encryption exists for initial authentication in 5G, however this requires the operator to deploy secure elements (UICC) and authentication network functions supporting asymmetric key algorithms. It is known that secure elements running such asymmetric key algorithms are more complex and require more battery power that are incompatible with low power and low cost loT devices.

In 5G networks, it is possible to send something else (of an IMSI) like an NAI, which is generally a human readable text based identifier. The home network identity (MCC / MNC) is needed and is in a different field than the identifier of the secure element.

These asymmetric key based technology are well known to be complex, costly to manage and unpractical for low end devices such as low capability and low cost loT devices.

Identity protection is provided in 5G for initial authentication. The encryption of the SUPI (Subscription Permanent Identifier) is based on the home operator pre-configured public key (Home Operator Certificate) stored in the USIM (Universal Subscriber Identity Module). Such system is cumbersome and costly to deploy and un-adapted to low capability devices that cannot afford to support public key computation due to battery constraints or cost constraints.

Another solution could be to use one or multiple symmetric keys stored in the USIM specifically used for the encryption of the device SUPI/IMSI. However, these keys for practicability reasons need to be shared among groups of devices. The weakness of these system is that if one of device is penetrated and the group key is revealed then the whole group is compromised.

It is the objective of this invention to provide a method and system to allow identity privacy protection for such devices using a symmetric key based technology.

Symmetric key based authentication requires both end of the mutual authentication process to know the identity of the other end user. This is the reason why identity protection cannot be ensured in earlier technology without introduction of public key mechanism: In symmetric key system the device needs to provide the network with its identity in clear in the initial authentication, for the network to be able to retrieve the pre-shared secret key based on the sent in clear identity (IMSI).

So, the invention proposes a solution to this problem.

More precisely, the present invention proposes a method for authenticating a secure element at the level of an authentication server, the secure element being able to cooperate with a telecommunication terminal, the method comprising:
- Generating at the secure element a first message comprising a partial IMSI of the secure element or a partial IMSI of an IMSI based user identity that is in the form of a NAI of the secure element, called MSIN_part1, the first message also comprising the MCC and MNC codes of the IMSI or of the IMSI based user identity that is in the form of a NAI of the secure element , the MSIN_part1 comprising some of the most significant digits of the MSIN;
- Generating at the secure element a second message containing a second part, called MSIN_part2, of the MSIN of the secure element and the current sequence number, the second message being encrypted by the key Ki of the secure element in order to provide a token X, the MSIN_part2 comprising some of the less significant digits of the MSIN;
- Transmitting the first message and the token X to the authentication server;
- At the authentication server, creating a list of the candidate secure elements for which the MSIN_part1 corresponds and, for each of the candidate secure elements of the list, decrypting the token X with the key Ki of each of the candidate secure elements of the list, in order to generate a decrypted IMSI comprising the MCC, MNC and MSIN_part1 of the first message and decrypted MSIN_part2 of the token X or a decrypted IMSI based user identity that is in the form of a NAI comprising the MCC, MNC and MSIN_part1 of the first message and the decrypted MSIN_part2 of the token X;
- Checking at the authentication server, for each candidate secure element of the list, which candidate IMSI or candidate IMSI based user identity that is in the form of a NAI :
   a) corresponds to the decrypted IMSI of the decrypted token X; and
   b) has an associated sequence number in a valid range of the decrypted sequence number;
- At the authentication server, generating an authentication vector by using the key Ki of the candidate secure element associated to the IMSI or IMSI based user identity that is in the form of a NAI that matches the decrypted MSIN_part2 of the decrypted token X and the candidate secure element has sequence number in a valid range of the decrypted sequence number in order to launch a challenge response process between the secure element and the authentication server.

The invention also concerns a secure element being able to cooperate with a telecommunication terminal, the secure element comprising a computer program comprising instructions for:
- Generating a first message comprising a partial IMSI or a partial IMSI based user identity that is in the form of a NAI, called MSIN_part1, the first message comprising:
   ∘ the MCC and MNC codes of the IMSI or of the IMSI based user identity that is in the form of a NAI of the secure element and
   ∘ the MSIN_part1
   the MSIN_part1 comprising some of the most significant digits of the MSIN;
- Generating a second message containing a second part, called MSIN_part2, of the MSIN of the secure element and the current sequence number, the second message being encrypted by the key Ki of the secure element in order to provide a token X, the MSIN_part2 comprising some of the less significant digits of the MSIN;
- Transmitting the first message and the token X to an authentication server.

The invention also concerns an authentication server able to authenticate a secure element, the secure element being able to cooperate with a telecommunication terminal, the authentication server comprising a computer program comprising instructions for:
- After having received from the secure element:
   ∘ a first message comprising a partial IMSI or a partial IMSI based user identity that is in the form of a NAI, called MSIN_part1, the first message comprising the MCC and MNC codes of the IMSI or of the IMSI based user identity that is in the form of a NAI of the secure element , the MSIN_part1 comprising some of the most significant digits of the MSIN;
   ∘ a second message containing a second part, called MSIN_part2, of the MSIN of the secure element and the current sequence number, the second message being encrypted by the key Ki of the secure element in order to provide a token X, the MSIN_part2 comprising some of the less significant digits of the MSIN;
- Retrieving a list of the candidate secure elements for which the MSIN_part1 corresponds and, for each of the candidate secure elements of the list, decrypting the token X with the key Ki of each of the candidate secure elements of the list in order to generate a decrypted IMSI or a decrypted IMSI based user identity that is in the form of a NAI, the decrypted IMSI or decrypted IMSI based user identity that is in the form of a NAI comprising the MCC, MNC and MSIN_part1 of the first message and decrypted MSIN_part2 of the token X;
- Checking for each candidate secure element of the list, which candidate IMSI or candidate IMSI based user identity that is in the form of a NAI:
   a) corresponds to the decrypted IMSI of the decrypted token X; and
   b) has an associated sequence number in a valid range of the decrypted sequence number;
- Generating an authentication vector by using the key Ki of the candidate secure element associated to the IMSI that matches the decrypted MSIN_part2 of the decrypted token X and the candidate secure element has a sequence number in a valid range of the decrypted sequence number in order to launch a challenge response process between the secure element and the authentication server.

The first MSIN_part1 and second part MSIN_part2 do or not fully comprise the MSIN.

The present invention will be better understood by reading the description of a preferred method described in the figures that represent a preferred implementation of the method of the invention. More precisely:
- Figure 1 represents a flow of the exchanged signals between a secure element and a home AUSF (H-AUSF (Authentication Server Function));
- Figure 2 represents the generation of a partial IMSI and of a token at the level of the secure element;
- Figure 3 represents how the partial IMSI and the token are exploited at the level of the home AUSF (H-AUSF) for generating an authentication vector.

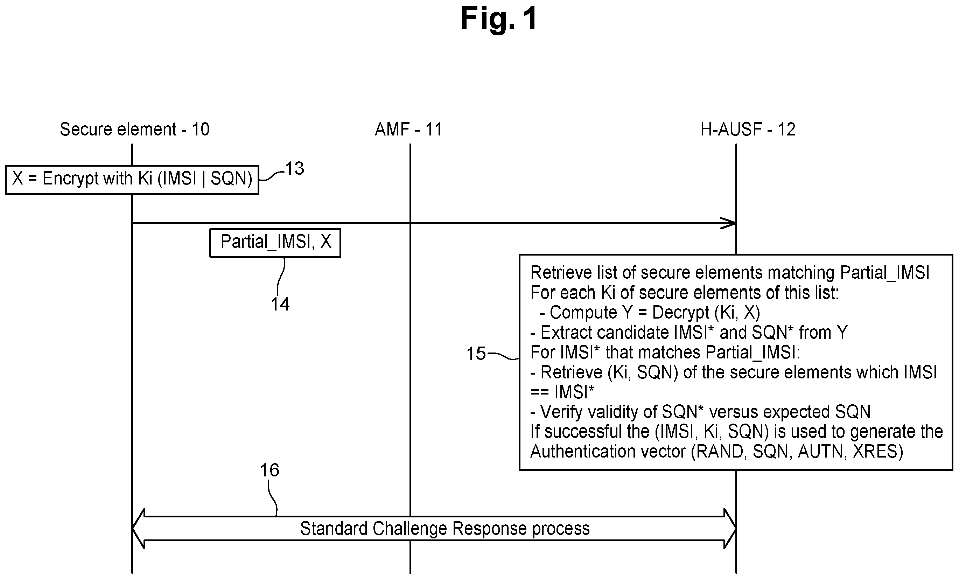

Figure 1 represents a flow of the exchanged signals between a secure element 10 and a home AUSF (referenced H-AUSF 12). The secure element 10 is able to cooperate with a telecommunication terminal. The purpose is to authenticate the secure element 10 at the level of the authentication server H-AUSF 12.

In this figure the use of a partial identifier (here a part of an IMSI) is represented.

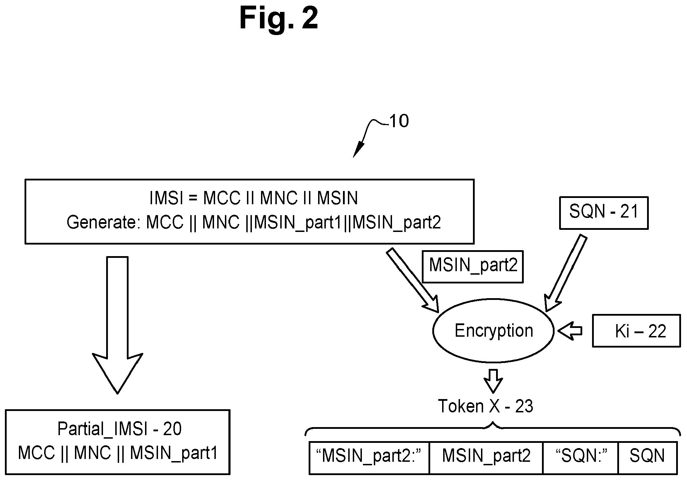

Figure 1 is described in parallel with figure 2 that shows what happens at the level of the secure element 10.

During the initial registration/authentication of the secure element 10, the process comprises:
- At step 13, a generation at the secure element 10 of a message, called second message, containing a second part, called MSIN_part2, of the MSIN of the secure element 10 and the current sequence number SQN 21, this second message being encrypted by the key Ki 22 of the secure element 10 in order to provide a token X 23, the MSIN_part2 comprising some of the less significant digits of the MSIN. So the concatenation of MSIN_part2 and SQN constitutes a second message that is then encrypted by the key Ki of the secure element 10 in order to provide the token X 23.
   The token X 23 comprises four fields: A first field that is a header "MSIN_part2:" announcing the content of the second field containing MSIN_part2, a third field that is a header "SQN:" announcing the last field containing SQN.
- a generation (step 13 also) at the secure element 10 of another message, called later on first message 20, comprising a partial IMSI (Partial_IMSI) of the secure element 10, called MSIN_part1, this first message 20 also comprising the MCC and MNC codes of the IMSI of the secure element 10, the MSIN_part1 comprising some of the most significant digits of the MSIN.

So, the MSIN_part1 that constitutes a partial IMSI (Partial_IMSI 20, see figure 2) may contain one or several of the most significant digits of the MSIN part of the IMSI. The fewer the number of digits of the MSIN_part1 are contained in the partial identity MSIN_part1, the higher is the identity privacy protection.

The Partial_IMSI 20 comprises a concatenation of the MCC, MNC and MSIN_part1.

At step 14, the partial IMSI 20 (MCC II MNC II MSIN_part1) and the token X 23 are transmitted to the authentication server 12 through an AMF 11 (Access and Mobility Management Function, see 3GPP TS 23.501).

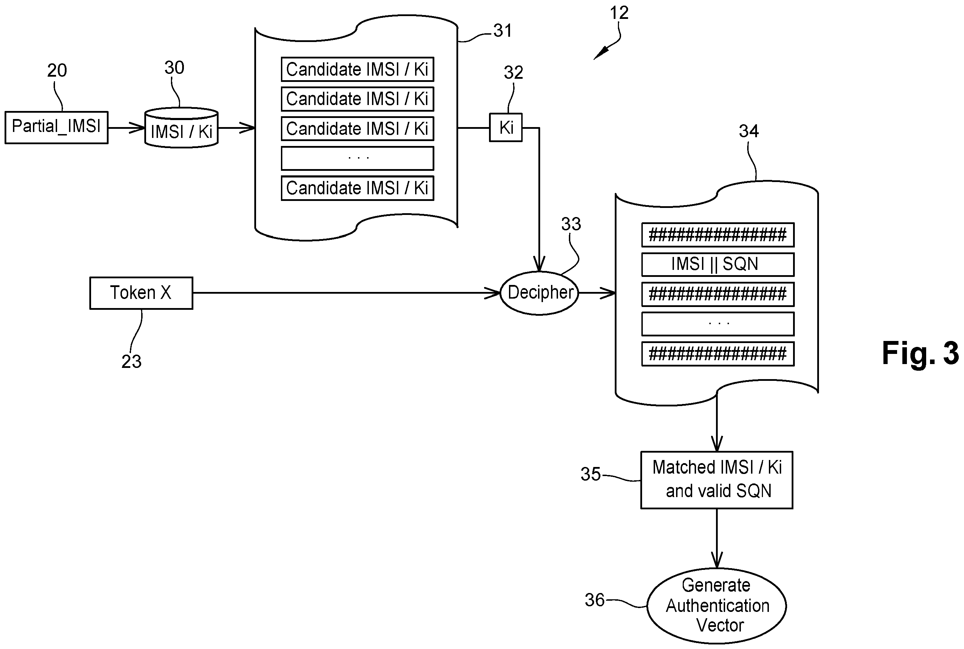

Then, as can be seen in figures 1 and 3, at the authentication server 12, when receiving the partial IMSI 20 (and the token X 23 which use will be later explained), a database 30 associates each partial IMSI 20 to a complete IMSI with the corresponding key Ki 22. This database permits to constitute a list 31 of the candidate secure elements for which the MSIN_part1 corresponds (step 15). For each of the candidate secure elements of the list, the token X 23 is decrypted (step 33) with the key Ki of each of the candidate secure elements of the list, in order to generate decrypted IMSIs (list 34). This list 34 thus contains all decrypted IMSIs and the corresponding decrypted sequence number SQN.

At step 35, the authentication server 12 checks, for each candidate secure elements of the list, which decrypted IMSI:
a - corresponds to the IMSI of the candidate secure element of the list 31; and
b - which candidate secure element of the list 31 has a sequence number in a valid range of the decrypted sequence number from token X 23.

Once such a candidate secure element having an IMSI of a recognized secure element has been found and for which a sequence number is in a correct range (generally within 32 consecutive values are comprised in this range), the authentication server 12 generates an authentication vector (step 36 in figure 3) by using the key Ki corresponding to the IMSI which has the decrypted MSIN_part2 and has a valid sequence number in order to launch a challenge response process (step 16 in figure 1) between the secure element 10 and the authentication server 12.

The method according to the invention can be used in 2 ways:
a- the first MSIN_part1 and second part MSIN_part2 do not fully comprise the MSIN;
b- the first MSIN_part1 and second part MSIN_part2 do fully comprise the MSIN.

Let's assume that a MSIN is 1234578910.

In the first case (a), we can:
- have a first MSIN_part1 being 1234
- and second part MSIN_part2 being 8910

In this first case, the first MSIN_part1 and second part MSIN_part2 do not fully comprise the MSIN (digits 567 are not sent).

In the second case (b), we can:
- have a first MSIN_part1 being 123456 (or 12345)
   and second part MSIN_part2 being 78910 (or 678910 respectively)

In this case, the first MSIN_part1 and second part MSIN_part2 do fully comprise the MSIN (all the digits of the MSIN are sent).

Not fully sending the MSIN raises the indetermination of the MSIN. So a hacking of the signals sent by the secure element 10 to the H-AUSF 12 has lower chances to be successful.

The above description has been done in case of the use of an IMSI. But it is also applicable when, instead of an IMSI, a NAI (Network Access Identifier) is used (NAI is a human readable text and comprises MCC/MNC codes). In this case, the partial partial_IMSI 20 is user identity based.

Thanks to the Ki 32 associated to each candidate IMSI, the token X is decrypted (step 33). It permits to generate another list 34 where for each decrypted IMSI (which is formed of the MSIN_part1 and the decrypted MSIN_part2), the sequence number SQN is retrieved. We have then here all the decrypted IMSIs and their associated decrypted SQNs. Thanks to the decrypted MSIN_part2 and to the decrypted SQN, it is then possible to know which candidate IMSI has the MSIN_part2 corresponding to the decrypted MSIN_part2, and that has the correct SQN (known at the level of the H-AUSF 12), or at least a SQN being in a correct range, in order to decide which one of the candidate IMSIs is matching (step 35).

The H-AUSF 12 can then (at step 36) generate an authentication vector by using the Ki of the candidate IMSI which has the correct MSIN_part2 and a valid sequence number SQN in order to launch a challenge response process between the secure element 10 and the authentication server 12.

Here the IMSI is used as an example. A group identity or other types of identities could be used as long as it does not identify the device/subscription uniquely and provides a certain level of identity uncertainty that complies with the GDPR regulations.

For example, a NAI (Network Access Identifier) could be used instead of an IMSI. IMSIs are used in before 5G networks (2, 3, 3 and 4G networks). In 5G networks, NAIs are used.

In this case, a NAI typically would be in the form of "Special_Group ID.Unique ID".

Where Special_Group ID is an identifier common to a group of secure elements in the field (comprising MCC and MNC codes) and Unique ID is the unique ID of each secure element (diversified per unique secure element) of the group.

The different IMSIs/NAIs are known by the H-AUSF 12.

The token X 13 is thus the result of the encryption, with the subscription secret key Ki, of the concatenation of a multiplicity of information pieces that include at least a part (least significant digits) of the identity of the subscription (IMSI) or the Unique ID part of the NAI when a NAI is used. The token X also contains the sequence number (SQN) that is used in the mutual authentication mechanism with the network (3GPP AKA). The sequence number was increased in previous authentication process (per 3GPP AKA also), so that the token X 13 is unique following an authentication process with the network.

Optionally a registration counter or a random number generated by the USIM may be part of the concatenation to provide higher entropy.

Optionally one or more well-known labels (e.g. "IMSI:", "SQN:", "Session Id:") may be part of the concatenated data to increase the level of certainty during the identification process by the home network. To be noted that the length of the IMSI is generally sufficient.

The serving network (AMF 11) uses the information (MCC and MNC) in the partial identity (Partial_IMSI) to route the registration request to the home network (H-AUSF 12)

The home network (H-AUSF 12) upon reception of the request (step 15) that contains the Partial_IMSI and the token X:
- Retrieves the list of candidate devices which partial identity match with the received partial identity Partial_IMSI;
- For each of the candidate devices of the list:
   ∘ uses the corresponding secret key (Ki) of the candidate device to decipher the received token X;
   ∘ Tries to extract data fields of the decipher data. Retrieves in the deciphered data the text labels when present as shown in figure 2 (i.e. "MSIN_part2:" and "SQN:";
   ∘ Retrieves the MSIN_part2 of IMSI of the registering device based on the deciphered text labels;
   ∘ Checks whether the deciphered MSIN_part2 is equal to the MSIN_part2 of this candidate device;
   ∘ Retrieves the sequence number SQN from the deciphered token X based on the deciphered text labels;
   ∘ Checks if the retrieved SQN value is coherent with the stored SQN value for that candidate device;
   ∘ If all the checks and verifications are successful, then the registering device is considered as identified.

When the registering device is identified (only one matched candidate device), the H-AUSF 12 performs the standard process of generating the authentication vector based on the IMSI/Ki and sequence number SQN of the matched device and sends the Authentication Vector to the AMF 11 (step 16 of figure 1).

To be noted that, the computation intensive task is only performed by the H-AUSF 12, for instance using an HSM.

The AMF 11 performs then the standard authentication of the registering device and reports the success to the Home Network.

In 5G, it is possible to send something else than an IMSI, like an NAI, which is text. The home network identity (MCC / MNC) is needed and is in a different field than the identity. So in this case the partial identity can be what the operator wants and not necessarily the form of a beginning of the IMSI.

In alternatives, one or multiple group keys G_key could be deployed by the home network operators for the specific tasks of encrypting the token X (i.e. subscription IMSI/SQN). In such case the partial identity of the subscription is replaced by a group key identity GK_id. Each group key identity GK_Id is associated to a group of devices which have different MSIN_part2 within that group. In this alternative, the USIM/device 10:
- is configured with not only the IMSI/Ki pair but also with a GK_id/G_key;
- generates the token X using its configured G_key;
- the token X 23 being the encryption of the concatenation of the partial subscription IMSI (MSIN_part2) and SQN as in the first description;
- sends the registration containing the GK_id and the generated Token X 23.

The remaining process is similar to the first detailed process, whereas the Partial_IMSI and the Ki for the encryption of the token X 23 are replaced respectively by the GK_id and G_key configured in the USIM/Device.

It is to be noted that the larger the number of groups (number of group keys used) are created by the home network operator, the smaller a group can be (fewer devices sharing the same group key) and the higher the level of security for the protection of the group key. However, this would limit the protection of the privacy of the user subscription identity within a smaller group.

It is also to be noted that one or more labels in the encrypted data is not necessary in this case as the deciphered data provide directly the correct MSIN_part2 and SQN that is in the group of devices associated to the GK_id, as by construction of the group, the MSIN_part2 of the devices are unique within this group of devices.

The GK_id could be added in the concatenation for verification after deciphering. However, this would lengthen the token X 23, which could be challenging for devices with low communication bandwidth.

The invention uses symmetric key based algorithm to protect the device identity in the initial authentication (registration) process.

The invention uses a differentiated key per device and does not use a group key.

The invention could be implemented so that only the end points (i.e. USIM 10 and H-AUSF 13) are modified and the intermediate nodes are unchanged by 3GPP standards.

There is an asymmetric level of computation in this method, in the sense that the intensive computation is only performed by the network side which is more capable than the device/secure element 10 side. On the device/secure element 10 side the USIM/device only performs the low demanding symmetric key encryption computation.

The invention also concerns a secure element 10 being able to cooperate with a telecommunication terminal, this secure element 10 comprising a computer program comprising instructions for:
- Generating a first message 20 comprising a partial IMSI or a partial IMSI based user identity that is in the form of a NAI, called MSIN_part1, the first message comprising:
   ∘ the MCC and MNC codes of the IMSI or of the IMSI based user identity that is in the form of a NAI of the secure element 10 and
   ∘ the MSIN_part1
   the MSIN_part1 comprising some of the most significant digits of the MSIN;
- Generating a second message containing a second part, called MSIN_part2, of the MSIN of the secure element 10 and the current sequence number, the second message being encrypted by the key Ki of the secure element 10 in order to provide a token X 23, the MSIN_part2 comprising some of the less significant digits of the MSIN;
- Transmitting the first message and the token X 23 to an authentication server 12.

The invention also concerns an authentication server 12 able to authenticate a secure element 10, the secure element 10 being able to cooperate with a telecommunication terminal, the authentication server 12 comprising a computer program comprising instructions for:
- After having received from the secure element 10:
   ∘ a first message comprising a partial IMSI or a partial IMSI based user identity that is in the form of a NAI, called MSIN_part1, the first message comprising the MCC and MNC codes of the IMSI or of the IMSI based user identity that is in the form of a NAI of the secure element 10, the MSIN_part1 comprising some of the most significant digits of the MSIN;
   ∘ a second message containing a second part, called MSIN_part2, of the MSIN of the secure element 10 and the current sequence number, the second message being encrypted by the key Ki of the secure element 10 in order to provide a token X 23, the MSIN_part2 comprising some of the less significant digits of the MSIN;
- Retrieving a list of the candidate secure elements for which the MSIN_part1 corresponds and, for each of the candidate secure elements of the list, decrypting the token X with the key Ki of each of the candidate secure elements of the list in order to generate a decrypted IMSI or a decrypted user identity that is in the form of a NAI, both comprising the MCC, MNC and MSIN_part1 of the first message and the decrypted MSIN_part2 of the token X, that is associated to the candidate secure element;
- Checking for each the candidate secure element of the list, which candidate IMSI
   a- corresponds to the decrypted IMSI of the decrypted token X; and
   b- has an associated sequence number in a valid range of the decrypted sequence number;
- Generating an authentication vector by using the key Ki of the candidate secure element associated to the IMSI of the candidate secure element that matches the decrypted MSIN_part2 of the decrypted token X and the candidate secure element has sequence number in a valid range of the decrypted sequence number in order to launch a challenge response process between the secure element 10 and the authentication server 12.

## Claims

1. A method for authenticating a secure element (10) at the level of an authentication server (12), said secure element (10) being able to cooperate with a telecommunication terminal, said method comprising:
- Generating at said secure element (10) a first message comprising a partial IMSI of said secure element (10) or a partial IMSI of an IMSI based user identity that is in the form of a NAI of said secure element, called MSIN_part1, said first message also comprising the MCC and MNC codes of said IMSI or of said IMSI based user identity that is in the form of a NAI of said secure element (10), said MSIN_part1 comprising some of the most significant digits of said MSIN;
- Generating at said secure element (10) a second message containing a second part, called MSIN_part2, of the MSIN of said secure element (10) and the current sequence number, said second message being encrypted by the key Ki of said secure element (10) in order to provide a token X, said MSIN_part2 comprising some of the less significant digits of said MSIN;
- Transmitting said first message and said token X to said authentication server (12);
- At said authentication server (12), creating a list of the candidate secure elements for which said MSIN_part1 corresponds and, for each of the candidate secure elements of said list, decrypting said token X with the key Ki of each of said candidate secure elements of said list, in order to generate a decrypted IMSI comprising said MCC, MNC and MSIN_part1 of said first message and decrypted MSIN_part2 of said token X or a decrypted IMSI based user identity that is in the form of a NAI comprising said MCC, MNC and MSIN_part1 of said first message and said decrypted MSIN_part2 of said token X;
- Checking at said authentication server (12), for each candidate secure element of said list, which candidate IMSI or candidate IMSI based user identity that is in the form of a NAI
a) corresponds to said decrypted IMSI of said decrypted token X; and
b) has an associated sequence number in a valid range of the decrypted sequence number;
- At said authentication server (12), generating an authentication vector by using the key Ki of said candidate secure element associated to the IMSI or IMSI based user identity that is in the form of a NAI that matches said decrypted MSIN_part2 of said decrypted token X and said candidate secure element has sequence number in a valid range of said decrypted sequence number in order to launch a challenge response process between said secure element (10) and said authentication server (12).

2. A method according to claim 1 wherein said first MSIN_part1 and second part MSIN_part2 do not fully comprise said MSIN.

3. A method according to claim 1 wherein said first MSIN_part1 and second part MSIN_part2 do fully comprise said MSIN.

4. A secure element (10) being able to cooperate with a telecommunication terminal, said secure element (10) comprising a computer program comprising instructions for:
- Generating a first message comprising a partial IMSI or a partial IMSI based user identity that is in the form of a NAI, called MSIN_part1, said first message comprising:
∘ the MCC and MNC codes of the IMSI or of said IMSI based user identity that is in the form of a NAI of said secure element (10) and
∘ said MSIN_part1
said MSIN_part1 comprising some of the most significant digits of said MSIN;
- Generating a second message containing a second part, called MSIN_part2, of the MSIN of said secure element (10) and the current sequence number, said second message being encrypted by the key Ki of said secure element (10) in order to provide a token X, said MSIN_part2 comprising some of the less significant digits of said MSIN;
- Transmitting said first message and said token X to an authentication server (12).

5. A secure element according to claim 4 wherein said first MSIN_part1 and second part MSIN_part2 do not fully comprise said MSIN.

6. A secure element according to claim 4 wherein said first MSIN_part1 and second part MSIN_part2 do fully comprise said MSIN.

7. An authentication server (12) able to authenticate a secure element (10), said secure element (10) being able to cooperate with a telecommunication terminal, said authentication server (12) comprising a computer program comprising instructions for:
- After having received from said secure element (10):
∘ a first message comprising a partial IMSI or a partial IMSI based user identity that is in the form of a NAI, called MSIN_part1, said first message comprising the MCC and MNC codes of the IMSI or of said IMSI based user identity that is in the form of a NAI of said secure element (10), said MSIN_part1 comprising some of the most significant digits of said MSIN;
∘ a second message containing a second part, called MSIN_part2, of the MSIN of said secure element (10) and the current sequence number, said second message being encrypted by the key Ki of said secure element (10) in order to provide a token X, said MSIN_part2 comprising some of the less significant digits of said MSIN;
- Retrieving a list of the candidate secure elements for which said MSIN_part1 corresponds and, for each of the candidate secure elements of said list, decrypting said token X with the key Ki of each of said candidate secure elements of said list in order to generate a decrypted IMSI or a decrypted IMSI based user identity that is in the form of a NAI, said decrypted IMSI or decrypted IMSI based user identity that is in the form of a NAI comprising said MCC, MNC and MSIN_part1 of said first message and decrypted MSIN_part2 of said token X;
- Checking for each candidate secure element of said list, which candidate IMSI or candidate IMSI based user identity that is in the form of a NAI:
a) corresponds to said decrypted IMSI of said decrypted token X; and
b) has an associated sequence number in a valid range of the decrypted sequence number;
- Generating an authentication vector by using said key Ki of said candidate secure element associated to the IMSI that matches said decrypted MSIN_part2 of said decrypted token X and said candidate secure element has a sequence number in a valid range of said decrypted sequence number in order to launch a challenge response process between said secure element (10) and said authentication server (12).

8. An authentication server (12) according to claim 7 wherein said first MSIN_part1 and second part MSIN_part2 do not fully comprise said MSIN.

9. An authentication server (12) according to claim 7 wherein said first MSIN_part1 and second part MSIN_part2 do fully comprise said MSIN.
